# EUROPÄISCHE PATENTSCHRIFT

(11) **EP 1 296 872 B1**
(45) Veröffentlichungstag und Bekanntmachung des Hinweises auf die Patenterteilung: **27.10.2004**
(21) Anmeldenummer: 01955223.1
(22) Anmeldetag: 28.06.2001
(51) Int. Cl.: B64C 1/18

(54) **DEKOMPRESSIONSEINHEIT FÜR DEN EXPLOSIVEN LUFTDRUCKAUSGLEICH**
DECOMPRESSION UNIT FOR EQUALIZING AN EXPLOSIVE AIR PRESSURE
UNITE DE DECOMPRESSION POUR COMPENSATION DE PRESSION D'AIR EXPLOSIVE

(30) Priorität: 29.06.2000 DE 10031714
(43) Veröffentlichungstag der Anmeldung: 02.04.2003
(73) Patentinhaber: Aircabin GmbH, 88471 Laupheim (DE)
(72) Erfinder: DIEHL, Robert, 21635 Jork (DE); BARSCH, Joachim, 89174 Altheim/Alb (DE); FALK, Gordon, 22605 Hamburg (DE)
(74) Vertreter: Hansmann, Dierk, Dipl.-Ing.
(86) Internationale Anmeldenummer: PCT/DE2001/002425
(87) Internationale Veröffentlichungsnummer: WO 2002/000500

(56) Entgegenhaltungen:
- EP-A- 0 420 306
- US-A- 3 938 764
- US-A- 4 049 221
- US-A- 4 383 666
- US-A- 4 703 908

## Beschreibung

Die Erfindung bezieht sich auf eine Dekompressionseinheit für den explosiven Luftdruckausgleich zwischen druckbeaufschlagten Bereichen eines Flugzeuges mit unterschiedlichen Luftdruckverhältnissen, die durch eine Wandstruktur voneinander abgegrenzt sind.

Seit den siebziger Jahren im 20. Jahrhundert werden Druckkabinen von Verkehrsflugzeugen mit einem System zum schnellen Ausgleich des Luftdrucks in den einzelnen Flugzeugbereichen ausgestattet, so daß ein plötzlicher Druckabfall im betroffenen Bereich nicht zum Ausfall flugwichtiger Strukturen oder Systeme führen kann. Ein Großraum-Verkehrsflugzeug (wide-body) verfügt bekanntermaßen sowohl im Passagierkabinenbereich (Oberflurbereich) als auch im Frachtraumbereich (Unterflurbereich) über ein großes Raumvolumen, wobei der für einen Dekompressionstuftstrom (zwischen diesen Flugzeugbereichen) erforderliche Betüftungsquerschnitt um ein Mehrfaches größer sein wird, wenn man den für den Rückluftstrom erforderlichen Belüftungsquerschnitt der Gitter bei normaler Belüftung vergleicht.

Es sind Systemauslegungen bekannt, bei denen entsprechende Luftschlitz-Druckausgleichsöffnungen oder Druckausgleichsklappen eingesetzt werden. Sie werden in der Regel im Fußverkleidungs- oder im Fußbodenbereich der betreffenden Flugzeugbereiche installiert, um über zusätzlichen Luftstromquerschnitt zu verfügen. Ein Großraum-Verkehrsflugzeug besitzt über einhundert solcher sogenannten Dekompressionseinheiten, davon jeweils eine installierte Einheit pro Flugzeugfensterbereich. Derartige Luftschlitz-Druckausgleichsöffnungen lassen sich einfach installieren, wobei sie allerdings leicht durch das Handgepäck eines Flugpassagiers oder durch sonstige Bordküchenartikel blockiert werden. Deshalb haftet ihnen der Ruf eines unerwünschten Gestaltungselementes an.

In aktuellen Auslegungen für Großraumflugzeuge werden Betätigungsklappen eingesetzt, mit denen der hinter die Druckausgleichsklappe eintretende Luftstrom zwangsventiliert (als sogenannte Luftrückstromleitung) der normalen Kabinenbelüftung rückgeführt wird. Die einzelne Klappe wird auf einen gegebenen (vorhandenen) Druckunterschied zwischen der Luftrückstromleitung einerseits und dem niedrigen Druckniveau der Luft unterhalb des Kabinenfußbodens andererseits reagieren, wobei sie sich in dieser Situation dann (nach außen) dem Bereich (also: in Richtung) des niedrigen Luftdruckes zuwenden wird. Dabei werden die Riegel einer strukturbefestigten Verschlußeinrichtung, mit welchen die Druckausgleichsklappe (bislang) verriegelt und damit in der sie umgebenden Struktur gehalten wird, gelöst (entriegelt), wodurch die Dnrckausgleichsklappe nach außen gedrückt (also: von der Struktur abgehoben) wird, so daß nunmehr der Kabinenüberdruck entweichen und ein Druckausgleich stattfinden kann. Bei dieser Art von Dekompressionseinheit werden nur feinverstellende Teile mit großer Oberfläche eingesetzt, damit deren Zweck erfüllt wird. Diese bekannten Auslegungen mit Druckausgleichsklappen für Dekompressionsanwendungen sind gewichtsmäßig als schwer einzustufen, wobei wegen ihrem komplizierten Aufbau außerdem entsprechender Aufwand für Wartung und unerwünschte Reparaturen zu beachten wäre.

Weiterhin ist aus der US-A 4,383,666 eine Dekompressionseinheit in einem Flugzeug für den Luftdruckausgleich zwischen druckbeaufschlagten Flugzeugbereichen mit unterschiedlichen Luftdruckverhältnissen bekannt. Die Flugzeugbereiche sind durch eine Wandstruktur voneinander abgegrenzt, innerhalb der sich eine Druckausgleichsöffnung befindet. Diese Druckausgleichsöffnung ist mit einer ersten Klappe verschlossen. Letztere ist mit einer an der Wandstruktur befestigten Verschlussvorrichtung verbunden, welche diese Klappe in der Druckausgleichsöffnung hält. Hinzukommend ist innerhalb eines Kabinenaußenbereiches eine durch Kontraktion sich verändernde Luftkammer angeordnet, die nach dem Vorbild der Figur 1 jener Druckschrift zwischen den Positionen der ersten Klappe und einer weiteren zweiten Klappe eingeschlossen wird, die von einer kammerumfassenden blechartigen Wand seitlich umrahmt werden. Diese Wandumrahmung der Luftkammer ist randseitlich der Druckausgleichsöffnung an der Wandstruktur befestigt, die mit entsprechenden Belüftungsöffnungen (abschnittsweise) perforiert ausgeführt ist.

Der Aufbau dieser Dekompressionseinheit berücksichtigt eine Festkörper-Konstruktion, deren Kontraktion mit einem federnden Auslöseelement (einer Zugfeder) realisiert wird. Ein Ende dieser Zugfeder ist an der ersten Klappe fixiert, wobei das andere Ende der Zugfeder mittig der weiteren Klappe angreift. Die Auslösung und die Öffnung dieser als Luftkammer ausgebildeten Festkörper-Konstruktion wird dermaßen umgesetzt, wonach zwei an der Wandumrahmung der Luftkammer befestigte und beweglich gelagerte Klappenabschnitte, aus denen die weitere Klappe integriert ist, nach einem sogenannten Kniehebelprinzip bei auftretendem Druckverlust respektive herrschender Druckdifferenz zwischen einem Passagier- und einem Frachtraum des Flugzeuges aufgrund einer Kraft, die mittig der Klappenabschnitte angreift und der Zugkraft der Feder entgegen gerichtet ist, von der ersten Klappe weggezogen werden. Mit einer Schwenkbewegung der Klappenabschnitte wird eine Freigabe der ersten Klappe aus der Verschlussvonichtung ausgelöst, wobei daraufhin beide Klappen in eine Position schwenken werden, in der die Durchtrittsöffnung für den Druckausgleich zwischen dem Passagier- und Frachtraum verfügbar wird. Demnach wird ein Auslösemoment jener Dekompressionseinheit in Abhängigkeit des angegebenen Federelements und dessen Federeigenschaften übertragen. Infolge des Eigengewichts der Festkörperkonstruktion dieser Dekompressionseinheit wird eine Eigenträgheit bestehen, die die Reaktionsschnelligkeit dermaßen ungünstig beeinflussen wird, dass ein schnell herbeizuführender Druckausgleich behindert bzw. erst verzögert ermöglicht wird. Durch die materialintensive (vergleichbar schwere) Festkörper-Ausführung dieser Dekompressionseinheit wird das Flugzeuggewicht ungünstig beeinflussi und damit das effektiv nutzbare Zuladungsgewicht entsprechend gemindert.

Demzufolge liegt der Erfindung die Aufgabe zugrunde, eine gattungsgemäße Dekompressionsanwendung derart zu verbessern, wonach man eine Druckausgleichplatte mit einem geeigneten Mechanismus, der sich auch als Nachrüstlösung ohne großen Aufwand einrüsten läßt, ausstattet, der die Druckausgleichsplatte - während des normalen Fluges und auch bei einer unbeabsichtigten Belastung (Verstellung) ihres Wirkungsbereiches mit diverser Fluggastlast - in der umgebenden Struktur hält. Dabei dürfen (im Vergleich mit Fluggastlasten) auftretende niedrigere Drucklasten den Mechanismus nicht zum Öffnen der Druckausgleichsklappe veranlassen. Der Mechanismus soll allerdings auf plötzlich eintretende kleine Kabinen(luft)druckveränderungen reagieren. Während des normalen Reisefluges (als auch während des Steig- oder Sinkfluges) eines Flugzeuges soll er gegen allmähliche Änderungen der räumlichen Luftdruckverhältnisse im betreffenden Flugzeugbereich resistent sein, also bei einer allmählichen (geringfügig abweichenden) Änderung der gewünschten Luftdruckverhältnisse nicht empfindlich sein. Außerdem soll der Mechanismus unabhängig von der Form und der Größe der Druckausgleichsklappe und unter Verzicht auf externe Energieressorcen zuverlässig arbeiten. Weiter soll mit der verbesserten Dekampressionsanwendung gegenüber aktuellen Systemauslegungen (auf die reinen Dekompressionsfunktionseinheiten bezogen) ein Beitrag zur Gewichtseinsparung erbracht werden.

Diese Aufgabe wird durch die im Anspruch 1 angegebenen Maßnahmen gelöst. In den weiteren Ansprüchen sind zweckmäßige Weiterbildungen und Ausgestaltungen dieser Maßnahmen angegeben.

Die Erfindung ist in einem Ausführungsbeispiel anhand der beigefügten Zeichnungen näher beschrieben. Es zeigen:
- Fig. 1: eine Dekompressionseinheit für den explosiven Luftdruckausgleich an einer in der Wandstruktur gehaltenen Druckausgleichsklappe bei ausgeglichenem Druckverhältnis zwischen druckbeaufschlagten Bereichen eines Flugzeuges;
- Fig. 2: die formveränderte Dekompressionseinheit an der noch in der Wandstruktur gehaltenen Druckausgleichsklappe nach der Fig. 1 bei gesunkenem Umgebungsdruck;
- Fig. 3: die Druckausgleichsklappe mit der formveränderten Dekompressionseinheit nach Fig. 2 im der Wandstruktur geöffneten Zustand;
- Fig. 4: eine Draufsicht der in mehrere Einzelkammern unterteilten Dekompressionseinheit;
- Fig. 5: eine Seitenansicht nach der Fig. 4 der aus mehreren seriell verbundenen Einzelkammern gebildeten Dekompressionseinheit.

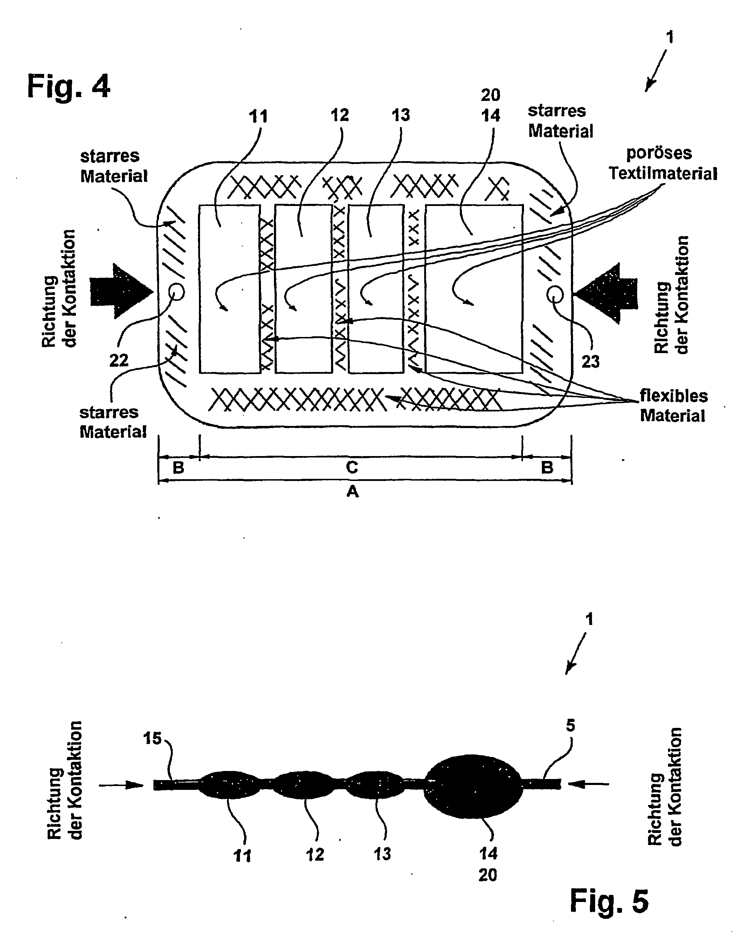

Es wird vorangestellt, daß die Dekompressionseinheit aus einer Luftkammer 1 besteht, deren Innenraum man (aus hinsichtlich der Fig. 4 angegebenen Gründen) durchaus in mehrere Einzelkammern 11, 12, 13, 14 unterteilt, deren Hohlräume miteinander in Reihe verbunden sind. Die vorgestellte Luftkammer 1 oder die Einzelkammern 11, 12, 13, 14 (nach der Fig. 4) stellen (für den Betrachter) entsprechende Hohlraumkörper veränderlicher Gestalt dar, die mit einem geeigneten formveränderbaren porösen (gelöcherten) Material, das in der Ebene der Kammerwand steif ist und in den anderen Richtungen flexibel ausgeführt ist, realisiert sind. Dafür wird textilgewebeartiges Material vorgeschlagen, das genügend luftdurchlässig ist. Wegen der gegebenen Luftdurchlässigkeit der Kammerwandung(en) wird die einzelne Kammern unter bestimmten (sie außerhalb der Kammerwandung umgebenen) Luftdruck-Bedingungen, auf die später näher eingegangen wird, sich mit Luft vollsaugen und in den vorgenannten Richtungen durch Kontraktion ihre Form (Gestalt) verändern.

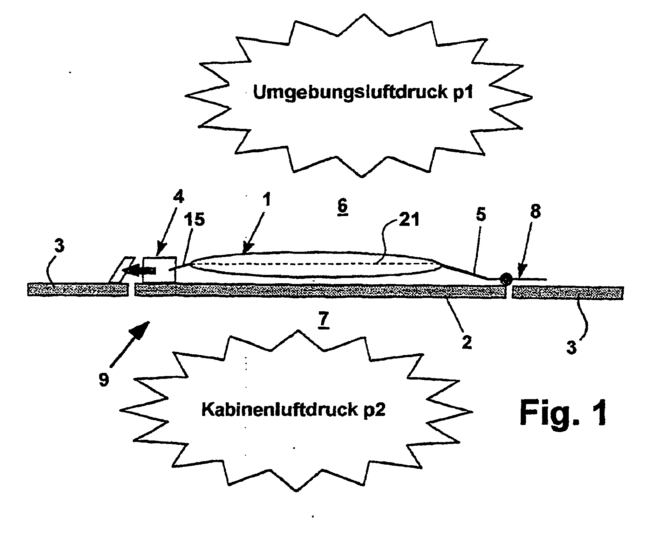

Die in der Fig. 1 dargestellte Dekompressionseinheit bezieht sich auf eine einzelne Luftkammer 1, deren Körperform man als flach bezeichnen wird. Diese aus einem textilgewebeartigen Material bestehende Luftkammer 1 verfügt (wie auch die übrigen vorgestellten Kammern in Korrelation der Figuren 4 und 5 ) über eine Vielzahl von (nicht gezeigten) Perforierungen durch die Kammerwandung.

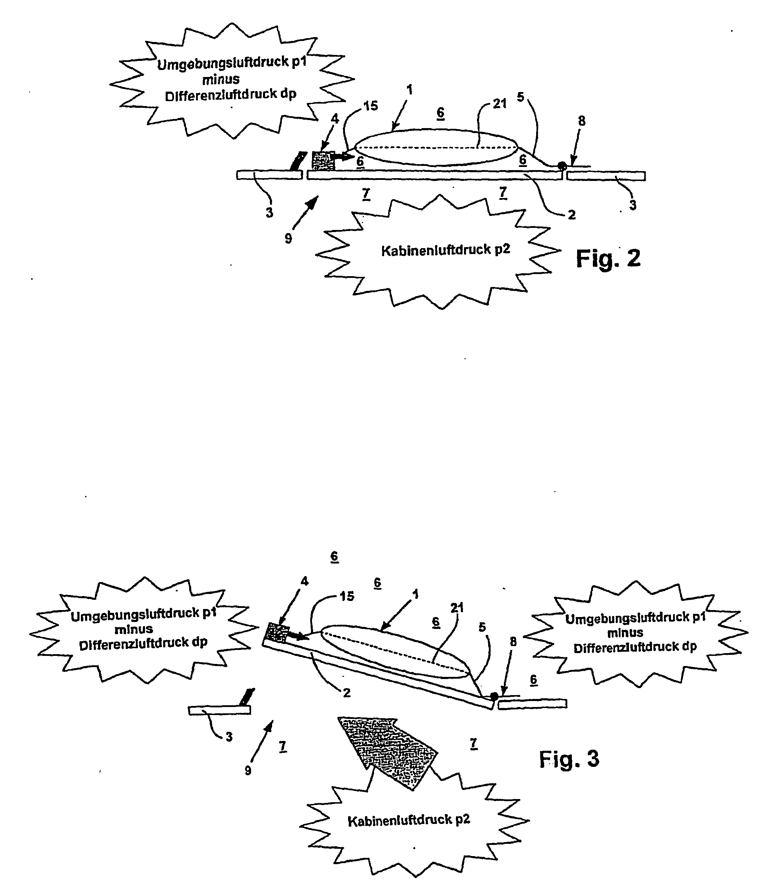

Jede Perforierung weist eine definierte wirksame Querschnittsfläche auf. Die effektive Perforationsfläche ist für jeden einzelnen Bereich oder für den Gesamtbereich der Oberfläche der perforierte Kammerwandung, der sich aus mehreren Einzelbereichen integriert, festgelegt, um eine genügende Luftdurchiässigkeit und damit eine ausreichende Kontraktion der Luftkammer 1 (nach dem Vorbild der Figuren 2 und 3) und auch der Arbeitskammern 11, 12, 13, 14 (nach dem Vorbild der Figuren 4 und 5) zu gewährleisten.

Zurückkommend auf die Fig. 1 wird fortgesetzt, daß die mit der genannten Luftkammer 1 umgesetzte Dekompressionseinheit (für den explosiven Luftdruckausgleich) in der Nähe der Peripherie einer Luftdruck-Ausgleichsklappe 2, die in der sie umgebenden Struktur gehalten wird, befestigt ist. Die umgebende Struktur wird durch eine Wandstruktur 3, innerhalb der sich wenigstens eine Druckausgleichsöffnung 9 befindet, die mit der Luftdruck-Ausgleichsklappe 2 verschlossen ist, verkörpert. Diese Wandstruktur 3, die mit einer Trennwand ausgeführt wird, trennt zwei druckbeaufschlagte Bereiche eines Flugzeuges mit unterschiedliche Luftdruckverhältnissen, die sich beispielgemäß auf einen Kabineninnen- und einen Kabinenaußenbereich 7, 6 beziehen, zueinander ab. Dabei liegt der (im wesentlichen) untere flache Oberflächenbereich der Luftkammer 1, der sich entlang einer Kammerlängsachse 21 erstreckt, (im nicht kontrahierenden Zustand) nahe an der oder auf der (zum Kabinenaußenbereich 6 gerichteten flachen) Oberfläche der Luftdruck-Ausgteichsklappe 2. Die Befestigung der Luftkammer 1 wird (nach der Fig. 1) mit einem nicht dehnungsfähigen Verbindungselement 5, 15, das jeweils an ihren ausgangs der Abflachung befindlichen Körperenden angeformt wird, realisiert. Dabei wird das freie Ende eines ersten Verbindungselementes 5 entweder an der Luftdruck-Ausgleichsklappe 2 selbst oder (mit genügenden Abstand) an der Wandstruktur 3 oder an einem der Luftdruck-Ausgleichsklappe 2 nahegelegenen (nicht gezeigten) Raumelement innerhalb dem erwähnten Kabinenaußenbereich 6 befestigt. Weil die Luftdruck-Ausgleichsklappe 2 in praxi einerseits einseitig einem randseitig der Druckausgleichsöffnung 9 positionierten Gelenk 8 (Scharnier) befestigt ist und damit gegenüber der Wandstruktur 3 (Trennwand) drehbeweglich gelagert wird, erfolgt anderseits deren Befestigung am randseitig gegenüberliegenden freien Klappenende (also am Klappenrand) allgemein an einer Verschlußvorrichtung 4. Dieses Klappenende wird demnach mit einem Riegel der als Verriegelungseinheit ausgebildeten Verschlußvorrichtung 4 in der sie umgebenen Wandstruktur 3 (im der Druckausgleichsöffnung 9 verschlossenen Zustand) in Pfeilrichtung gehalten. Nun wird vorgesehen, daß das freie Ende eines nicht dehnbaren zweiten Verbindungselementes 15 mit der Verschlußeinheit 4 verbunden ist, um mit der (durch Kontraktion der Luftkammer 1 eintreffenden) Veränderung der Luftkammerform in den vorher genannten Richtungen mit einem Lösen des (nicht gezeigten) Riegels die Luftdruck-Ausgleichsklappe 2 aus ihrer Befestigung zu befreien. Zudem wird erwähnt, daß die befestigten Verbindungselemente 5, 15 möglicherweise mit einer gewissen Vorspannung installiert werden, die aber keinesfalls die Riegelbefestigung gefährden.

Im weiteren wird eine Antwort darauf gegeben, wie nun diese vorgestellte Dekompressionsanwendung unabhängig der Form und der Größe der Luftdruck-Ausgleichklappe 2 und unter Verzicht auf die extern bezogene Bereitstellung von flugzeuginternen Energieressourcen zuverlässig ein Lösen der Luftdruck-Ausgleichsklappe 2 aus der Verriegelung wegen des situationsbedingt angestrebten Druckausgleiches zwischen nebeneinander befindlichen Flugzeugbereichen umsetzen wird.

Allgemein betrachtet wird der Kabinenaußenbereich 6 mit einem Umgebungsluftdruck p1 und der Kabineninnenbereich 7 mit einem Kabinenluftdruck p2 beaufschlagt. Nach der Fig. 1 herrschen ausgeglichene Luftdruckverhältnisse zwischen diesen beiden Flugzeugbereichen vor, soll heißen, daß der Umgebungsluftdruck p1 wertmäßig dem Kabinenluftdruck gleich groß sein wird.

Die Situation nach der Fig. 2 berücksichtigt demgegenüber unausgeglichene Druckverhälnisse zwischen den beiden vorher genannten Flugzeugbereichen. In dieser Situation wird im Kabinenaußenbereich 6 der Umgebungsluftdruck p1 um einen Differenzluftdruck dp wertmäßig gesunken sein. Entsprechend dem Materialverhalten der Luftkammer 1 (vgl. dazu die vorangestellten allgemeinen Betrachtungen) wird letztere bei einem plötzlichen Abfall des Umgebungstuftdruekes p1 ihre Körperform verändern. Mit dem Druckabfall wird sich im Kabinenaußenbereich 6 (also auch in der Umgebung der Luftkammer 1) ein Unterdruck einstellen, infolge dessen durch die Perforierung der Kammerwandung in den Hohlraum der Luftkammer 1 eine entsprechende Luftmenge angesaugt wird, daraufhin diematerialflexible (gewebeartige) Kammerwandung infolge der Luftbefüllung ihre äußere Form verändert. Zurückkommend auf das angesprochene Materialverhalten der Luftkammer wird sie sich durch Kontraktion verändern. Wenn also der (kammerumgebende) Luftdruck um die Luftkammer 1 entsprechend abfällt, so daß er unterhalb des Kabinenluftdruckes p2 liegt, dann wird die Luftkammer 1 von der einst (bei ausgeglichenem Drücken p1, p2 vorhandenen) flachen Körperform zu einer runden Form mit prismenartigen Kammerquerschnitt anschwellen. Dabei wird die Luftkammer 1 sich in den Richtungen, die rechtwinklig zur Richtung des Kammerwachstums liegen, zusammenziehen. Andererseits wird die Luftkammer 1 infolge der voluminösen Luftanreicherung in den verbleibenden (nicht kontrahierenden) Kammerbereichen und in allen quer zur Kammerlängsachse 21 gelegenen Richtungen ihren Hohlraum erweitern.

Mit einem Blick auf die Fig. 3 wird der Fachmann gedanklich folgendes mit übertragen. Der vorbeschriebene Vorgang (nach Fig. 2) überträgt- wegen der stattfindenden Kontraktion mit gleichermaßen einhergehender Formveränderung der Luftkammer 1 - einen flächenverteilten Druck auf die Oberfläche der Luftdruck-Ausgleichsklappe 2 infolge deren Berührung mit dem (formveränderten) Oberflächenbereiches der Luftkammer 1 in Richtung der Kammerlängsachse 21. Gleichermaßen wird eine definierte Zugkraft entwickelt, die über die kammerbefestigten Verbindungselemente 5, 15 auf deren weitere Befestigungsendbereiche übertragen wird.

Die über das erste Verbindungselement 5 übertragene Zugkraft wird dessen Befestigung an der Luftdruck-Ausgleichsktappe 2 oder an der Wandstruktur 3 oder an einem (der Luftdruck-Ausgleichsklappe 2 oder der Luftkammer 1 nahegelegenen) Raumelement innerhalb des Kabinenaußenbereiches 6 nicht gefährden. Dagegen wird die über das zweite Verbindungselement 15 übertragene Zugkraft auf die Verschlußvorrichtung 4 (auf die Verriegelungseinheit) ausreichen, den Riegel in Pfeilrichtung zu lösen, wodurch die Luftdruck-Ausgleichsklappe 2 aus ihrer Verriegelung befreit wird und - durch den auf ihrer rückseitigen Oberfläche lastenden Kabinenluftdruck p2 - dem Kabinenaußenbereich 6 zugewandt öffnen wird. Weil der Riegel durch die Kontraktion der Luftkammer 1 betätigt wird, wird nunmehr ein Druckausgleich zwischen den beiden Kabinenbereichen durch die freigegebene Druckausgleichsöffnung 9 stattfinden.

In der Fig. 4 wird die Draufsicht einer Ausführungsform der Luftkammer 1 nach der Fig. 1 dargestellt, dabei diese Luftkammer-Ausführungsform der Ausführung einer "Luftmatratze" entspricht. Danach ist der Hohlraum (Innenraum) der als Dekompressionseinheit vorgesehenen Luftkammer 1 in mehrere Einzelkammem 11, 12, 13, 14 unterteilt, wobei die kammerunterteilten Hohlräume nicht untereinander luftverbunden sind. Wie gesagt, die Perforation der Kammerwandung und die Materialauswahl entspricht dem vorgeschilderten Sachstand. Für die Befestigung bzw. befestigte (mechanische) Verbindung dieser Art von Luftkammer 1 werden randseitlich (durch den Randquerschnitt eingelassene) Löcher 22 vorgesehen, wovon eines der (einer - mit geringerer Volumenausdehnung ausgestatteten Einzelkammer 11 - nahegelegenen) Löcher 22 für die Verbindung mit der Verschlußvorrichtung 4 (genauer: der Riegelverbindung der Riegeleinheit) und das verbleibende gegenübertiegende (und einer - mit erweiterter Volumenausdehnung ausgestatteten Einzelkammer 14 - nahegelegenen) der Löcher 23 für die Befestigung an der Luftdruck-Ausgleichsklappe 2 oder der Wandstruktur 3 (ein diesen Elementen nahegelegenes Raumelement scheidet angenommenerweise aus) vorgesehen wird. Außerdem läßt sich dieser Figur die in Pfeilrichtung angegebene Kontraktion der als Mehrkammer-Luftkammer ausgeführten Dekompressionseinheit entnehmen. Dabei bilden die Einzelkammern 11, 12, 13, 14 eine Mehrkammer-Luftkammer, um deren Kraftübertragung oder Lageänderung auf die Luftdruck-Ausgleichsklappe 2 und in Korrelation auf die Verschlußvorrichtung 4 genauer: auf den Riegel der Riegeleinheit) zu optimieren. In diesem Kammern-Gebilde bilden die Einzelkammem 11, 12, 13, 14 eine bestimmte Anzahl diskreter Hohlräume, die untereinander- wie erwähnt - nicht verbunden sind. Ein Vorschlag für den Materialeinsatz der Mehrkammer-Luftkammer wird in der Fig. 4 unterbreitet. Der Vorgang der Kontraktion der Mehrkammer-Luftkammer wird nach dem vorbeschriebenen Musterablauf der einzelnen Luftkammer 1 (hinsichtlich der Fig. 1 bis 3 ) geschehen, nur daß die kontrahierende Wirkung der betreffenden Einzelkammer 11, 12, 13, 14 (Luftkammer) zu dem beabsichtigten Zweck eintreffen wird. Außerdem wird der aufmerksame Beobachter aus der Fig. 4 (und auch in Korrelation der Fig. 5) allgemein entnehmen, daß eine der außenbefindlichen Einzelkammern 11, 14 im kontrahierenden Endzustand einen im Vergleich der verbleibenden Einzelkammern 12, 13 deutlich größeren Kammerquerschnitt aufweist, die als Luftkammer-Behälter 20 verwendet wird.

In der Fig. 5 wird die Seitenansicht der Ausführungsform nach der Fig. 4 dargestellt, wobei betont wird, daß bei dieser Ausführung zwischen den Einzelkammern 11, 12, 13, 14 (untereinander) keine Luftverbindung besteht. Durch die Expansion der einzelnen Luftkammern erfolgt eine Kontraktion der (sogenannten) gesamten Luftmatratze, wobei nach dieser Darstellung - mit einem vergleichenden Blick auf die Fig. 4- eine Reduzierung der Baulänge A des Matratzenkörpers um die Länge B auf die kontrahierte Länge C bereits geschehen ist. Aufgrund der Reihenschaltung der Einzelkammer 11, 12, 13, 14 (respektive 20) ist die Kontraktionslänge größer als nur bei einer Luftkammer, das heißt, die Kontraktionsgeschwindigkeit ist bei mehreren in Reihe geschalteten Luftkammern höher als nur bei einer Luftkammer.

Aufgrund von unterschiedlich großen Einzelkammem 11, 12, 13, 14 (Luftkammern) können deshalb unterschiedliche Kontraktionswege realisiert werden. Ebenso ist die Kontraktionsreaktionszeit beeinflußbar.

Der Vollständigkeit halber werden einige sinnvolle Modifikationen der beschriebenen explosiven Dekompressionseinheit- soweit noch nicht beschrieben - angegeben, um diese für die Inbetriebnahme geeignet zu machen oder unter mancherlei Betriebsbedingungen zu berücksichtigen. Diese werden nachfolgend erörtert.

Die Kammer(n) wird (werden) absichtlich so ausgelegt, daß Luft langsam austritt und dabei die Kammer nicht anschwillt sowie folglich die Verschlußvorrichtung 4 (Verriegetungseinheit) nicht betätigt wird, so daß das begrenzte Arbeitsmedium-Volumen nicht erschöpft wird, wenn bei normalem Flugbetrieb des Flugzeuges - in der Regel mehrere Minuten andauernde - Änderungen in der Höhe des Kabinenluftdruckes p2 (im Kabineninnenbereich 7) und dem Umgebungsluftdruck p1 (im Kabinenaußenbereich 6) eintreten.

In Abhängigkeit vom Durchlässigkeitsgrad, den Umgebungsbedingungen und der erforderlichen Regelung kann die erforderliche Eigenschaft der Durchlässigkeit dadurch erreicht werden, daß - wie gesagt - für die einzelne Kammer ein poröses Gewebe verwendet wird, oder daß in der Kammerwand einige Perforationen vorgesehen werden.

Die Dekompressionseinheit kann aus mehreren in Reihe arbeitenden Luftkammern (Einzelkammern 11 bis 14) aufgebaut sein, um die Lageveränderung zu verstärken. Die typische Schweiß- oder Klebenaht am Kammerrand stellt Befestigungen bereit, die gegebenenfalls durch Laminierung und / oder Ösen verstärkt wird.

Es wird vorgeschlagen, für die Luftkammerfertigung geeignetes Material mit langer Lagerfähigkeitsdauer, beispielsweise in der Luftfahrtbranche übliches Gewebematerial, das nach bekannten Herstellungs- oder Fertigungsverfahren für die Schwimmwesten, Notrutschen oder Schlauchbooten oder ähnlichen zugelassenen Materialien produziert wird, zu verwenden.

Das poröse Material ist ähnlich oder stark dem eines Airbags, welche in der Automobilindustrie zum Einsatz kommen. Eine Qualifikation für den Luftfahrtbereich wäre eventuell notwendig.

Die Riegel der sogenannten Verriegelungseinheit sollen dermaßen beschaffen sein, wonach es nur geringen Energieaufwand für das Entriegeln (Öffnen des Riegels) bedarf, wobei kein zwingendes Erfordernis besteht, daß die Verriegelungseinheit nach geschehenem Entriegeln der Luftdruck-Ausgleichsklappe 2 offen gehalten wird, weshalb die Verwendung eines kippoder bistabilen oder (einfach nur) arretierenden Schnappschlosses zu Verriegelung vorgeschlagen wird.

Eine wiederholbare Riegelbetätigungskraft (Verriegelung) wird die Zuverlässigkeit der vorgestellten Dekompressionseinheit dadurch verbessern, daß eine versehentliche Riegelbetätigung (Verriegelung) verhindert wird, falls die Einheit bei niedrigen Druckdifferenzen arbeiten wird.

Zudem - auf den Aufbau und die Wirkungsweise der Dekompressionseinheit abzielend - wird ferner (soweit noch nicht deutlich hervorgehoben) ergänzt, daß die einzelne aufblasbare (luftansaugende) Luftkammer 1 in Korrelation der übrigen Kammern aus dem nehmlichen textilen Gewebematerial besteht, dem man - wie gesagt - in der (im wesentlichen flachen) Ebene der Kammerwand steife und feste und in den anderen Richtungen flexible Eigenschaften bestätigen wird. Die Körperform der Luftkammer läßt sich mit einem gasförmigen-Medium , wie eben Luft, ihre Körperform durch Kontraktion- zu dem beabsichtigten Zweckvoluminös verändern. Die Luftkammer 1 als auch die weiteren vorgestellten Kammerarten arbeiten nach dem Prinzip, wonach der Oberflächenbereich der Kammer effektiv konstant bleibt, so daß die Ausdehnungskraft respektive Lageänderung der Kammer aufgrund des Druckes, der durch das Medium (hier: Luft) bereitgestellt wird, unmittelbar in eine Kontraktionskraft respektive Lageänderung (an oder nahe der Luftdruck-Ausgleichsklappe 2) umgewandelt wird, die in etwa rechtwinklig zur Richtung der ursächlichen (ersten) Ausdehnung verläuft.

Die Dekompressionseinheit wird überdies auch eine Ausdehnungskraft durch folgende Fähigkeit entwickeln, wonach durch die vorgeschilderte Veränderung der geometrischen Körperproportionen der einzelnen Luftkammer 1 oder der Anordnung von mehreren Kammern [Einzelkammern 11 bis 14 (respektive 20)], die entweder in Reihe oder parallel oderwegen der Lage ihrer Befestigung(smöglichkeiten) auch gemischt geschalten sind, die besagte Kontraktionskraft oder die (auf)summierten Kontraktionskräfte (zu einer einheitlich wirkenden Gesamt-Kontraktionskraft) auf die Luftdruck-Ausgleichsklappe 2 durch Veränderung ihrer Körperlage übertragen wird. Mit diesen Maßnahmen bezweckt man, daß die Kraftübertragung auf die Luftdruck-Ausgleichsklappe 2 ohne weitere Komponenten, wie Hebel oder Gestänge, übertragen wird.

Die Hauptvorteile der Dekopressionseinheit bei der Rationalisierung des Druckausgleiches zwischen druckbeaufschlagten Flugzeugbereichen werden (im Vergleich mit aktuellen Produkten) darin gesehen, daß man ein unabhängig arbeitendes Luftvolumen in einem effizienten Druckbehälter (eben der Luftkammer 1) nutzen wird, das unabhängig der (dem Druckbehälter üblicherweise) angeschlossenen Luftrückstromleitung wirkt. Weiter können Material, Volumen und Form der Luftkammer 1 für die Dekompressionsempfindlichkeit respektivezuverlässigkeit optimiert werden, weshalb die Luftkammer 1 über eine minimale Größe und minimales Gewicht verfügen wird, und daneben eine geringe Trägheit und eine schnelle Systemreaktion erreicht wird. Einfachheit, geringe Kosten (bei der Herstellung und während ihrem Einsatz), hohe Zuverlässigkeit sind weitere nennenswerte (vorteilhafte) Eigenschaften der Luftkammer(n). Die vorgestellte Lösung arbeitet unabhängig von Form und Größe der Druckausgleichsklappe 2 oder der sie aufnehmenden Flugzeugstruktur. Sie kann daher in anderen Flugzeug-Baumustern und -Ausstattungen umgesetzt werden, ohne das gewisse Modifikationen an entsprechenden Komponenten notwendig sind. Die Dekompressionseinheit kann getrennt zugelassen werden, wodurch sämtliche Verbesserungen, die nicht im Zusammenhang mit der Dekompression stehen, ohne teure Zulassungsaktivitäten (für den Prüfteil: Dekompression) vorgenommen werden können.

Eine Funktionsprüfung für die Abnahme oder die Erfüllung laufender Lufttüchtigkeitsforderungen lassen sich mit einem kleinen Prüfgerät (einer Spritze) ohne bedeutenden Aufwand erledigen.

Abschließend wird erwähnt, daß mit dem Einsatz der vorgestellten Dekompressionseinheitauch unter dem Aspekt ihrer modifizierten Ausführung - zum Ausgleich des Luftdrucks zwischen druckbeaufschlagten Räumen für Luftfahrtanwendungen im Vergleich mit bekannten Dekompressionsanwendungen eine erhebliche Gewichts-, Volumen-, Komplexitäts- und Kosteneinsparung erzielt wird. Die Anwendung dieser Lösung ist nicht allein auf den Luftfahrzeugbau begrenzt. Ihr Einsatz wird immer dann nützlich sein, wenn bei bestimmten Lösungen die Kraftübertragung eines kontrahierenden Körpers durch den Druck eines gespeicherten Mediums sinnvoll wird, um durch die Krafteinwirkung die Körperlage eines anderen Körper zu erreichen. Diese Tatsache wird deshalb von besonderem Interesse sein, falls man (ohne großen Aufwand) eine (unmittelbare) Zugkraft erzeugen will, wobei man auf die Zwischenschaltung andere Bauelemente (wie Hebel und Gestänge) verzichtet.

## Patentansprüche

1. Eine Dekompressionseinheit in einem Flugzeug für den explosiven Luftdruckausgleich zwischen einem Kabineninnenbereich (7) und einem Kabinenaußenbereich (6) des Flugzeuges mit unterschiedlichen Luftdruckverhältnissen, die durch eine Wandstruktur (3), innerhalb der sich wenigstens eine Druckausgleichsöffnung (9) befindet, voneinander abgegrenzt sind, wobei die Druckausgleichsöffnung (9) mit einer Luftdruck-Ausgleichsklappe (2) verschlossen ist und letztere mit einer an der Wandstruktur (3) befestigten Verschlussvorrichtung (4) verbunden ist, die die Luftdruck-Ausgleichsklappe (2) in der Druckausgleichsöffnung (9) hält, **dadurch gekennzeichnet, dass** sich innerhalb vom Kabinenaußenbereich (6), der mit einem Umgebungsluftdruck (p1) beaufschlagt wird, eine perforierte Luftkammer (1) befindet, mit der die Dekompressionseinheit gegenständlich umgesetzt ist, welche einerseits mit der Verschlussvorrichtung (4) verbunden ist, und andererseits in der Nähe der Peripherie der LuftdruckAusgleichsklappe (2) befestigt ist wobei eine Längenkontraktion der Luftkammer (1) infolge einer explosiven Umgebungsluftdruckänderung im Kabinenaußenbereich (6) erfolgt, wodurch die Verschlussvorrichtung (4) der Luftdruck-Ausgleichsklappe (2) geöffnet wird.

2. Dekompressionseinheit nach Anspruch 1, **dadurch gekennzeichnet, dass** die Luftkammer (1) ein entlang einer Kammerlängsachse (21) sich im wesentlichen flach erstreckender Körper ist, dem an den ausgangs der Abflachung befindlichen Körperenden ein nicht dehnungsfähiges Verbindungselement angeformt ist, von denen ein erstes Verbindungselement (5) an der Luftdruck-Ausgleichsklappe (2) oder an der Wandstruktur (3) oder an einem der Luftdruck-Ausgleichsklappe (2) nahegelegenen Raumelement befestigt ist und eine zweites Verbindungselement (15) mit der Verschlussvorrichtung (4) verbunden ist.

3. **Dekompressionseinheit** nach Anspruch 1, **dadurch gekennzeichnet, dass** der Innenraum der Luftkammer (1) in mehrere Einzelkammern (11, 12, 13, 14) unterteilt ist.

4. Dekompressionseinheit nach einem der Ansprüche 1 bis 3, **dadurch gekennzeichnet, dass** die Luftkammer (1) oder die Einzelkammem (11, 12, 13, 14) unter sich verändernden Druckverhältnissen ihre Form dermaßen verändern, wonach sie unter dem Einfluss abfallenden Umgebungsluftdruckes (p1), der unterhalb einem Kabinenluftdruck (p2) innerhalb eines durch die Wandstruktur (3) abgetrennten Kabineninnenbereiches (7) liegt, die Fähigkeit besitzen, ihre im wesentlichen flache Körperform durch an den Körperenden einsetzende und zum Körperzentrum gerichtete Kontraktion zu verändern, die im Endstadium bei einem Kabinenluftdruck (p2) größer einem Umgebungsluftdruck (p1) eine rundgeschwollene dicke Körperform mit ellipsenähnlichen Kammerquerschnitt oder eine fassähnliche Körperform ist.

5. Dekompressionseinheit nach Anspruch 4, **dadurch gekennzeichnet, daß** die einzelne Luftkammer (1) oder die einzelne Einzelkammer (11, 12, 13, 14) im kontrahierten Endzustand mit ihrer äußeren Kammeroberfläche auf der zum Kabinenaußenbereich (7) gerichteten Kiappenoberftäche der Luftdruck-Ausgleichsklappe (2) liegend angeordnet ist und von der Luftkammer (1) oder den außenbefindlichen Einzelkammern (11, 14) der seriell verbundenen Einzelkammern (11, 12, 13, 14) infolge des Kammerwachstums durch Kontraktion eine ausreichende Zugkraft der beiden Verbindungselemente (5, 15) entwickelt wird, so daß man über das zweite Verbindungselement (15) ein Öffnen (Betätigen) der Verschlußanordnung (4) umsetzt (erreicht).

6. Dekompressionseinheit nach den Ansprüchen 3 bis 5, **dadurch gekennzeichnet, daß** eine der außenbefindlichen Einzelkammern (11, 14) im kontrahierenden Endzustand einen im Vergleich der verbleibenden Einzelkammem (12, 13) deutlich größeren Kammerquerschnitt aufweist, die als Luftkammer-Behälter (20) eingesetzt ist.

7. Dekompressionseinheit nach Anspruch 3, **dadurch gekennzeichnet, daß** die Einzelkammern (11, 12, 13, 14) miteinander in Reihe nicht luftverbunden sind.

## Claims

1. Decompression unit in an aircraft for equalising an explosive air pressure between a cabin internal region (7) and a cabin external region (6) of the aircraft in which different air pressures prevail, separated from one another by a wall structure (3) in which at least one pressure equalisation orifice (9) is provided, and the pressure equalisation orifice (9) is closed off by an air pressure equalisation flap (2) connected to a locking device (4) attached to the wall structure (3) which retains the air pressure equalisation valve (2) in the pressure equalisation orifice (9), **characterised in that** inside the cabin external region (6) where an ambient air pressure (p1) prevails, a perforated air chamber (1) which intrinsically alters the decompression unit is disposed, and on the one hand is connected to the locking device (4) and on the other hand is secured in the vicinity of the periphery of the air pressure equalisation flap (2), whereby in the event of an explosive ambient air pressure change in the cabin external region (6), the air chamber (1) contracts lengthways causing the locking device (4) of the air pressure equalisation flap (2) to open.

2. Decompression unit as claimed in claim 1, **characterised in that** the air chamber (1) is a body which extends essentially flat along a chamber longitudinal axis (21), to which a non-expandable connecting element is joined at the body ends disposed where the flat region starts, of which a first connecting element (5) is secured to the air pressure equalisation flap (2) or to the wall structure (3) or to a spacer element disposed close to an air pressure equalisation flap (2) and a second connecting element (15) is connected to the locking device (4).

3. Decompression unit as claimed in claim 1, **characterised in that** the interior of the air chamber (1) is divided into several individual chambers (11, 12, 13, 14).

4. Decompression unit as claimed in one of claims 1 to 3, **characterised in that** the air chamber (1) or the individual chambers (11, 12, 13, 14) change shape when subjected to changing pressure conditions as a result of which, under the influence of a drop in ambient air pressure (p1) to a level below a cabin air pressure (p2) inside a cabin internal region (7) separated off by the wall structure (3), they retain their capacity to change their essentially flat body shape by means of a contraction starting at the body ends and directed towards the body centre, so as to assume a roundly swollen thick body shape with a chamber cross-section akin to an ellipsis or a barrel-shaped body in the final stage when a cabin air pressure (p2) is higher than an ambient air pressure (p1).

5. Decompression unit as claimed in claim 4, **characterised in that**, in the final contracted state, the individual air chamber (1) or the individual chambers (11, 12,13, 14) are disposed with their external chamber surface lying on the flap surface of the air pressure equalisation flap (2) facing the cabin external region (7) and the chamber expansion caused by contraction of the air chamber (1) or the individual chambers (11, 14) disposed at the outside of the serially connected individual chambers (11, 12, 13, 14) results in a traction force at the two connecting elements (5, 15), which is enough to cause (effect) the opening (operation) of the locking system (4) via the second connecting element (15).

6. Decompression unit as claimed in claims 3 to 5, **characterised in that** one of the individual chambers (11, 14) disposed on the outside has a significantly larger chamber cross-section than the other individual chambers (12, 13) in the final contracted state and is used as an air chamber-container (20).

7. Decompression unit as claimed in claim 3, **characterised in that** the individual chambers (11, 12, 13, 14) do not have a serial air flow connection with one another.

## Revendications

1. Unité de décompression dans un avion pour la compensation de la pression d'air explosive entre une zone de cabine intérieure (7) et une zone de cabine extérieure (6) de l'avion présentant des conditions de pression d'air différentes, qui sont séparées l'une de l'autre par une structure de paroi (3) dans laquelle est aménagée au moins une ouverture de compensation de pression d'air (9), l'ouverture de compensation de pression d'air (9) étant fermée par un volet de compensation de pression d'air (2) et ledit volet étant relié à un dispositif de verrouillage (4) fixé à la structure de paroi (3) qui maintient le volet de compensation de pression d'air (2) dans l'ouverture de compensation de pression d'air (9), **caractérisée par le fait que** dans la zone de cabine extérieure (6), dans laquelle règne une pression d'air ambiant (p1), se trouve une chambre à air (1) perforée, qui constitue concrètement l'unité de décompression et qui d'une part est liée au dispositif de verrouillage (4), et d'autre part est fixée dans le voisinage de la périphérie du volet de compensation de pression d'air (2), la chambre à air (1) se contractant dans sa longueur consécutivement à une variation explosive de la pression d'air ambiant dans la zone de cabine extérieure (6), ce qui a pour effet d'ouvrir le dispositif de verrouillage (4) du volet de compensation de pression d'air (2).

2. Unité de décompression selon la revendication 1, **caractérisée par le fait que** la chambre à air (1) est un corps essentiellement plat qui s'étend le long d'un axe longitudinal de chambre (21), avec aux extrémités du corps situées à l'extérieur de la partie plate, un élément de liaison non extensible, parmi lesquels un premier élément de liaison (5) est fixé au volet de compensation de pression d'air (2) ou à la structure de paroi (3) ou à un élément d'enceinte proche du volet de compensation de pression d'air (2), et un deuxième élément de liaison (15) est relié au dispositif de verrouillage (4).

3. Unité de décompression selon la revendication 1, **caractérisée par le fait que** l'espace intérieur de la chambre à air (1) est divisé en plusieurs chambres élémentaires (11, 12, 13, 14).

4. Unité de décompression selon une des revendications 1 à 3, **caractérisée par le fait que** la chambre à air (1) ou les chambres élémentaires (11, 12, 13, 14) changent de forme lorsque les conditions de pression changent, les chambres, sous l'influence de la baisse de la pression d'air ambiant (p1) qui est inférieure à une pression d'air de cabine (p2) à l'intérieur d'une zone de cabine intérieure (7) séparée par un structure de paroi (3), ayant la capacité de modifier la forme essentiellement aplatie de leur corps par une contraction qui commence aux extrémités du corps et est dirigée vers le centre du corps, la forme du corps à l'état final, en présence d'une pression d'air de cabine (p2) qui est supérieure à une pression d'air ambiant (p1), étant une forme gonflée arrondie avec une section transversale de chambre ellipsoïdale ou une forme de tonneau.

5. Unité de décompression selon la revendication 4, **caractérisée par le fait que** la chambre à air (1) ou les chambres élémentaires (11, 12, 13, 14), à l'état final contracté, sont appliquées avec leur surface extérieure sur la surface du volet de compensation de pression d'air (2) tournée vers la zone de cabine extérieure (7) et que la chambre à air (1) ou les chambres individuelles (11, 14) extérieures parmi les chambres individuelles (11, 12, 13, 14) connectées en série du fait du grossissement des chambres développent par contraction une force de traction suffisante des deux éléments de liaison (5, 15), de sorte que l'on produit (obtient) par l'intermédiaire du deuxième élément de liaison (15) une ouverture (actionnement) du dispositif de verrouillage.

6. Unité de décompression selon les revendications 3 à 5, **caractérisée par le fait que** l'une des chambres individuelles (11, 14) extérieures, à l'état final contracté, présente une section de chambre nettement plus grande par rapport aux chambres individuelles (12, 13) restantes, qui est utilisée comme réservoir (20) de chambre à air.

7. Unité de décompression selon la revendications 3, **caractérisée par le fait que** les chambres individuelles (11, 12, 13, 14) ne sont pas connectées en série sur le plan pneumatique.
